# EUROPÄISCHE PATENTANMELDUNG

(11) **EP 4 389 716 A1**
(43) Veröffentlichungstag der Anmeldung: **26.06.2024**
(21) Anmeldenummer: 23213810.7
(22) Anmeldetag: 01.12.2023
(51) Int. Cl.: C04B 20/02, C04B 38/08

(54) **VERFAHREN ZUR HERSTELLUNG EINES AKTIVIERTEN MATERIALS, VERWENDUNG DES MATERIALS IN EINER TROCKENMÖRTELMISCHUNG, TROCKENMÖRTELMISCHUNG MIT DEM MATERIAL, VERFAHREN ZUR HERSTELLUNG DER TROCKENMÖRTELMISCHUNG UND DEREN VERWENDUNG**

(30) Priorität: 05.12.2022 DE 102022213096
(71) Anmelder: Xella Technologie- und Forschungsgesellschaft mbH, 14797 Kloster Lehnin (DE)
(72) Erfinder: Stumm, Andreas, 14797 Kloster Lehnin (DE)
(74) Vertreter: Dr. Solf & Zapf Patent- und Rechtsanwalts PartG mbB

(57) **Zusammenfassung**

Die vorliegende Erfindung betrifft Verfahren zur Herstellung eines aktivierten Materials für eine, insbesondere mineralische, Trockenmörtelmischung, die Verwendung des Materials in einer, insbesondere mineralischen, Trockenmörtelmischung, eine Trockenmörtelmischung mit dem Material, ein Verfahren zur Herstellung der Trockenmörtelmischung und deren Verwendung.

## Beschreibung

Die vorliegende Erfindung betrifft Verfahren zur Herstellung eines aktivierten Materials für eine, insbesondere mineralische, Trockenmörtelmischung, die Verwendung des Materials in einer, insbesondere mineralischen, Trockenmörtelmischung, eine Trockenmörtelmischung mit dem Material, ein Verfahren zur Herstellung der Trockenmörtelmischung und deren Verwendung.

Üblicherweise handelt es sich bei Mauermörteln um werksseitig vorgemischte Trockenmörtelmischungen (Werk-Trockenmörtel). Trockenmörtelmischungen sind vorfabrizierte Trockenmischungen (sogenannte Werkmörtel), bestehend aus zumindest einem, insbesondere mineralischen, Bindemittel, zumindest einem Zuschlagstoff, in der Regel zumindest einem Zusatzstoff und/oder zumindest einem Zusatzmittel, die auf der Baustelle nur noch mit Wasser zu einem Frischmörtel angerührt werden müssen und damit gebrauchsfertig sind.

Für die Formulierung "zumindest eine(n)" im Rahmen dieser Anmeldung gilt Folgendes: Wenn zumindest eine Komponente enthalten sein kann, bedeutet dies, dass auch eine Mischung aus verschiedenen dieser Komponenten enthalten sein kann.

Die Trockenmörtelmischung liegt somit vorzugsweise als loses Schüttgut vor. Sie wird vorzugsweise dabei als Sackware oder als Siloware in einem Bausilo bzw. Trockenmörtelsilo an den jeweiligen Einsatzort, insbesondere die Baustelle, geliefert. Die Trockenmörtelmischung kann aber auch in Form eines Trockenmörtelformkörpers, z. B. eines gepressten Pellets vorliegen.

Zusatzstoffe sind fein verteilte Stoffe, die bestimmte Eigenschaften des Mörtels beeinflussen. Sie beeinflussen vorrangig die Verarbeitbarkeit des Frisch- und die Festigkeit und Dichtigkeit des Festmörtels. Im Gegensatz zu Zusatzmitteln ist die Zugabemenge im Allgemeinen so groß, dass sie bei der Stoffraumrechnung zu berücksichtigen ist. Zusatzstoffe dürfen das Erhärten des Zementes sowie die Festigkeit und Dauerhaftigkeit des Mörtels nicht beeinträchtigen. Bei den Zusatzstoffen wird unterschieden zwischen inaktiven (inerten) Zusatzstoffen und aktiven Zusatzstoffen, insbesondere puzzolanischen Zusatzstoffen und latent hydraulischen Zusatzstoffen, und organischen Zusatzstoffen, Inerte Zusatzstoffe reagieren nicht oder höchstens oberflächlich mit dem Bindemittel. Im Rahmen der Erfindung werden die aktiven Zusatzstoffe dem Bindemittelanteil zugerechnet, sofern sie zur Ausbildung der Bindemittelmatrix beitragen. Zudem wird auch der Erstarrungsregler dem Bindemittelanteil zugerechnet.

Zusatzstoffe sind z.B. in der DIN EN 12620:2015-07 "Natürliche Gesteinsmehle" oder der DIN EN 15167-1 :2006-12 "Hüttensandmehl zur Verwendung in Beton, Mörtel und Einpressmörtel" genormt. Zusatzstoffe gehören zum Mehlkornanteil des Mörtels. Als Mehlkorn bzw. Mehl werden im Rahmen der Erfindung alle Körnungen bezeichnet, deren Korngröße ≤ 0,125 mm beträgt. Im Rahmen der Erfindung werden alle inerten Bestandteile der Trockenmörtelmischung mit einer Korngröße ≤ 0,125 mm als Zusatzstoffe bezeichnet bzw. dem Zusatzstoffanteil zugerechnet.

Zuschlagstoffe sind ebenfalls inert und gröber als Zusatzstoffe. Unter Zuschlagstoffen (Gesteinskörnung) versteht man ein körniges Material für die Verwendung im Bauwesen. Gesteinskörnungen werden nach ihrer Herkunft, ihrem Gefüge, der Korngröße sowie der Kornrohdichte eingeteilt und können natürlich, industriell hergestellt oder rezykliert sein. Grundsätzlich unterscheidet man anhand der Kornrohdichte ρ_{Rg}, zwischen Leichtzuschlag (leichter Gesteinskörnung) (ρ_{Rg} < 2000 kg/m³), Normalzuschlag (normaler Gesteinskörnung) (ρ_{Rg} = 2000-3000 kg/m³) und Schwerzuschlag (schwerer Gesteinskörnung) (ρ_{Rg} > 3000 kg/m³).

Im Rahmen der Erfindung werden alle inerten Bestandteile der Trockenmörtelmischung mit einer Korngröße > 0,125 mm als Zuschlagstoffe bezeichnet bzw. dem Zuschlagstoffanteil zugerechnet. Es kann dabei sein, dass eine Komponente mit einer entsprechenden Kornverteilung teilweise dem Zuschlagstoffanteil und teilweise dem Zusatzstoffanteil zugerechnet wird.

Gesteinskörnungen für Mörtel sind in der DIN EN 13139:2013-07 genormt. Im Rahmen der Erfindung und im Gegensatz zur DIN EN 13139:2013-07, wird Beton dadurch von Mörtel abgegrenzt, dass er zumindest einen groben Zuschlagstoff mit einer Korngröße > 4 mm aufweist. Der Zuschlagstoff im Mörtel weist dagegen eine Korngröße von höchstens 4 mm auf.

Zusatzmittel werden dem Trockenmörtel zugesetzt, um durch chemische oder physikalische Wirkung oder durch beides die Eigenschaften des Frisch- oder Festmörtels - wie z.B. Verarbeitbarkeit, Erstarren, Erhärten, Wasseraufnahme und Wasserdampfdiffusion oder Frostwiderstand - zu beeinflussen. Zusatzmittel werden in so geringen Mengen zugegeben (< 5 M.-% des Zementanteils), dass sie als Raumanteil des Mörtels ohne Bedeutung sind. Zusatzmittel werden flüssig, mehl- bzw. pulverförmig oder als Granulat geliefert. In Trockenmörtelmischungen sind sie pulverförmig oder als Granulat enthalten. Zusatzmittel für Mörtel sind z.B. in der DIN EN 934-2:2012-08 "Zusatzmittel für Beton, Mörtel und Einpressmörtel" genormt.

Mauermörtel wird bekanntermaßen insbesondere zur Vermörtelung der Lagerfugen und mitunter auch der Stoßfugen in einem Mauerwerk verwendet. Insbesondere wird Mauermörtel zur Herstellung von Lagerfugenmörtelschichten in einem Mauerwerk verwendet. Die Anforderungen an Mauermörtel sind in der DIN EN 998-2:2017-02 festgelegt. Und die Anwendung von Mauermörtel in Bauwerken ist in der DIN 20000-412:2019-06 geregelt. Derartiger Mauermörtel wird auch als Hintermauermörtel bezeichnet.

Vormauermörtel wird z.B. für die Vormauerung wie Verblender, Sichtmauerwerk oder Sichtfugen eingesetzt.

Dünnbettmörtel wird für Plansteine, z.B. Planziegel, verwendet, also bei Mauersteinen, die eine geringe Maßabweichung in der Steinhöhe aufweisen. Er kann auch zum Verlegen von Fliesen und Platten verwendet werden. Dünnbettmörtel wird in der Regel in einer Fugendicke von 1-3 mm verarbeitet. Des Weiteren weist Dünnbettmörtel gemäß DIN EN 998-2:2017-02 eine maximale Korngröße ≤ 2 mm auf. Gemäß der Muster-Verwaltungsvorschrift Technische Baubestimmungen (MVV TB), Ausgabe 2021/1 weist Dünnbettmörtel bei Anwendung in Deutschland sogar nur eine maximale Korngröße ≤ 1 mm auf.

Leichtmauermörtel enthält Leichtzuschläge wie z.B. geblähte Perlite, Blähton, Blähglas oder Bims. Die Trockenrohdichte von Leichtmauermörtel beträgt < 1,5 kg/dm³. Leichtmauermörtel wird gemäß DIN EN 998-2:2017-02 und DIN 20000-412:2019-06 aufsteigend nach seiner Festigkeit in unterschiedliche Mörtelgruppen eingeteilt. Normalmauermörtel weist demgemäß eine Trockenrohdichte ≥ 1,5 kg/dm³ auf.

Putzmörtel sind in der DIN EN 998-1:2016 genormt. Putze bilden bekanntermaßen einen Belag auf Außen- oder Innenwänden oder Decken eines Gebäudes. Es können dabei mehrere Putze übereinander angeordnet sein, zum Beispiel mindestens ein Unterputz und mindestens ein Oberputz. Der Putzmörtel wird mit Wasser zu einem Frischmörtel angemischt und auf den jeweiligen Untergrund aufgetragen. Dies kann maschinell oder von Hand erfolgen. Maschinell wird der Frischmörtel auf der Baustelle mit einer Putzmaschine bzw. Mischmaschine und einer Spritzdüse aufgebracht. Die Putzmaschine bzw. Mischmaschine ist dazu z.B. an zumindest ein eine trockene Putzmörtelmischung enthaltendes Bausilo bzw. Trockenmörtelsilo montiert.

Des Weiteren ist bekannt, zerkleinertes Porenbetonmaterial für Trockenmörtelmischungen zu verwenden.

Porenbetonmaterial besteht aus hydrothermal gehärtetem, porosiertem Calciumsilikathydratmaterial. Es wird hergestellt aus einer wässrigen Mischung bzw. Frischbetonmasse, welche mindestens eine im Hydrothermalprozess reaktionsfähige CaO-Komponente und mindestens eine im Hydrothermalprozess reaktionsfähige SiO₂-Komponente, ein Treibmittel, insbesondere Aluminiumpulver und/oder -paste, sowie gegebenenfalls, insbesondere inerte, Zusatzstoffe enthält. Außerdem enthält die Frischbetonmasse häufig mindestens ein Zusatzmittel, z.B. ein Fließmittel und/oder ein Dispergiermittel. Die gießfähige bzw. gießfertige Frischbetonmasse wird in eine Gießform gegossen, auftreiben und ansteifen gelassen, geschnitten und anschließend einer Dampfhärtung unterzogen. Im Gegensatz zu herkömmlichem, nicht autoklaviertem Beton weist Porenbetonmaterial keine groben Zuschlagkörner mit einer Korngröße > 2,0 mm auf.

Für die Herstellung von hydrothermal gehärtetem Schaumbetonmaterial wird der Frischbetonmasse anstelle des Treibmittels vorgefertigter Schaum untergemischt oder die einen Schaumbildner enthaltende Frischbetonmasse wird durch Rühren direkt aufgeschäumt und anschließend die gießfähige bzw. gießfertige Frischbetonmasse in die Gießform gegossen. Der Treibprozess entfällt jeweils.

Herkömmliches Poren- und Schaumbetonformmaterial besteht somit im Wesentlichen aus einem Feststoffsteggerüst, welches in der Regel hauptsächlich aus Calciumsilikathydratphasen (CSH-Phasen) besteht. Hauptsächlich meint, dass das Feststoffsteggerüst bezogen auf seine Trockenmasse zu über 50 M.-% aus den CSH-Phasen besteht. Das Feststoffsteggerüst kann zudem z.B. Restquarzkörner sowie gegebenenfalls die inerten Zusatzstoffe enthalten. Die Restquarzkörner und die inerten Zusatzstoffe sind in die CSH-Phasen eingebettet. Das Feststoffsteggerüst weist Stege auf, die die durch die Porosierung oder die Schaumzugabe oder das Aufschäumen künstlich erzeugten Poren (= Makroporen) umgeben. Außerdem weist das Feststoffsteggerüst Mikro-, Gel- und Nanoporen auf, die in die CSH-Phasen eingebettet sind bzw. in diesen verteilt sind. Die Nano-, Gel- und Mikroporen sind Bestandteil des Feststoffsteggerüsts. Die CSH-Phasen des Feststoffsteggerüsts fungieren somit als Bindephase im Feststoffsteggerüst. Sie sind größtenteils kryptokristallin bis kristallin, in der Regel handelt es sich um CSH(I) und hauptsächlich um 11 Å-Tobermorit.

Poren- bzw. Schaumbetonsteine sind Bausteine aus Poren- und Schaumbetonmaterial. Die in der Regel unbewehrten Poren- bzw. Schaumbetonsteine werden hauptsächlich als Mauersteine eingesetzt. Sie werden in Abhängigkeit von den Fertigungstoleranzen auch als Poren- oder Schaumbetonplansteine- oder -blöcke bezeichnet.

Bei der Herstellung von Poren- bzw. Schaumbetonmaterial, insbesondere von Poren- bzw. Schaumbetonformkörpern, fällt in der Regel Ausschussmaterial an, das bei der Herstellung von neuem Poren- bzw. Schaumbetonmaterial, insbesondere von neuen Poren- bzw. Schaumbetonsteinen, verwendet wird. Hierzu wird es auf eine Korngröße ≤ 2 mm mechanisch zerkleinert und anschließend der Frischbetonmasse zugegeben. Die mechanische Zerkleinerung erfolgt in der Regel mittels eines Backenbrechers.

Des Weiteren ist es, wie bereits erläutert, bekannt, gemahlenes Porenbetonmaterial in Trockenmörtelmischungen oder anderen Mischungen zu verwenden.

Die DE 10 2006 049 836 A1 offenbart beispielsweise die Herstellung eines hydraulischen Bindemittels aus Baureststoffen z.B. zur Herstellung von hydrothermal erzeugten Baustoffen, wie zum Beispiel Porenbeton oder Kalksandstein. Die Baureststoffe enthalten Calciumsilikathydrate oder Zementstein als Bindephase und Zuschlagstoffe. Gemäß dem Verfahren der DE 10 2006 049 836 A1 werden zunächst Füllstoffe abgetrennt und die verbleibende Stoffmenge zur Ausbildung einer hydraulisch aktiven Phase thermisch behandelt. Dazu werden die Baureststoffe auf eine Korngröße < 10 mm zerkleinert, durch Sieben und/oder Sichten eine Anreicherung der Bindephase der Baureststoffe durchgeführt und diese anschließend auf 600 bis 800 °C für einen Zeitraum von 0,25 bis zu 10 Stunden erhitzt. Die bindemittelreiche Feinfraktion wird dabei durch Absiebung und/oder Sichten einer Kornfraktion kleiner 0,063 mm aus dem auf Korngrößen < 10 mm zerkleinerten Baureststoff gewonnen. Gemäß der DE 10 2006 049 836 A1 kann es sich bei den Baureststoffen zudem um Porenbetonbruch handeln.

Das hydraulische Bindemittel wird zudem beispielsweise alleine oder in Mischung mit Füllstoffen im Erdbau und Grundbau zur Verdämmung, Hohlraumverfüllung, im Straßen-und Wegebau zur Bodenstabilisierung, Bodenverbesserung oder Bodenverfestigung und als Spezialbindemittel verwendet. Des Weiteren kann es auch als Grundstoff für die Herstellung eines Feinstbindemittels verwendet werden.

Die CN 113213846 A offenbart einen Mauermörtel, der zerkleinertes, calciniertes und gemahlenes Porenbetonpulver enthält. Dabei wird beim Zerkleinern zunächst ein Porenbetongranulat mit einer Korngröße < 0,16 mm erzeugt. Durch das anschließende Calcinieren für 4 bis 6 Stunden bei 700 bis 900 °C und das Aufmahlen auf vorzugsweise < 0,045 mm wird das Porenbetonpulver aktiviert und kann Zement ersetzen. Der Mauermörtel enthält zudem Portlandzement und kann Zuschlagstoffe, wie expandierten Perlit und/oder keramischen Sand und/oder mit Wasser abgeschreckte Hochofenschlacke aufweisen. Zudem kann der Mauermörtel Hydroxypropylmethylcellulose und/oder Latexpulver und/oder Luftporenbildner als Zusatzmittel enthalten.

Die CN 111439964 A offenbart eine Trockenmörtelmörtelmischung mit Porenbetonabfall, welcher gemahlen wird und eine Kornfraktion mit einer Korngröße ≤ 45 µm abgesiebt und anschließend bei 700 bis 900°C thermisch behandelt wird.

Die DE 20 2018 105 762 U1 offenbart eine Betonmischung, bei der das hydraulische Bindemittel bis zu 25 % durch Porenbetonabfall < 800 µm ersetzt wird, der einen Siebrückstand bei einem 45 µm Sieb von < 50 % aufweist und aus der Entstaubung von Porenbeton-Recyclinganlagen stammt. Die Betonmischung enthält zudem natürliche Gesteinskörnung der Korngrößen 0/4, 4/8, 8/16, 16/32.

Aus der KR 1999-0001414 A geht ein Isoliermörtel für eine Bodenisolierungsschicht hervor, der auf < 1 mm zerkleinertes Porenbetonmaterial oder Porenbetonkörner mit einer Korngröße < 5 mm aufweist.

Die CN 103951340 B offenbart einen Reparaturmörtel für Porenbetonplatten, der zu Pulver zerkleinerten Porenbetonabfall aufweist.

Die RU 2010144708 A offenbart einen Trockenmörtel, welcher zerkleinerten Porenbetonabfall aufweist, der einen Siebrückstand bei 2,5 mm von < 1,5% aufweist.

Aus der EP 2 336 096 B1 gehen Trockenmörtelformkörper, z.B. zur Herstellung eines Dünnbettmörtels hervor, welche Porenbetongranulat als Presshilfsmittel mit Korngrößen bis 1 mm aufweisen. Die Restfeuchte des Porenbetongranulats beträgt < 0,3 Gew.-%.

Die CN 101781109 B offenbart einen Trockenmörtel mit Porenbetonabfall, der auf 0,1 - 5 mm zerkleinert und in einem Trommel-Heißlufttrockner getrocknet wurde.

Und aus der JP 2006062927 A geht eine Mörtelzusammensetzung hervor, die gemahlenes Porenbetonmaterial mit einer Korngröße < 0,5 mm enthält.

Die CN 106116359 A offenbart einen Reparaturmörtel für Porenbetonplatten mit zu Pulver zerkleinertem Porenbetonabfall.

Aus den Druckschriften CN 103819162 A, CN 103803931 A, CN 103755260 A und CN 103755258 A geht ebenfalls jeweils ein Mörtel mit Porenbetonpartikeln hervor. Die Korngröße wird nicht spezifiziert.

Auch die CN 103613341 A offenbart eine Trockenmörtelmischung mit gemahlenem Porenbetonabfall, der eine Korngröße von 60-120 Mesh (125 - 250 µm) aufweist.

Die CN 103553488 A offenbart einen Mauermörtel basierend auf Porenbetonschlacke. Der Mauermörtel weist auf 0 - 2,5 mm zerkleinertes Porenbetonmaterial auf.

Und aus der DE 10 2009 058 410 B3 geht ein Dünnbettmörtel in Form einer mineralischen Werktrockenmischung hervor, die enthält:
- 15-50 Gew.-% mindestens eines mineralischen Bindemittels
- 0,1-4 Gew.-% mindestens eines Zusatzmittels
- 5-20 Gew.-% Calciumsilikathydratmaterial und/oder Bentonit
und als Rest mindestens einen Gesteinssand und/oder mindestens ein Gesteinsmehl, wobei die Bestandteile der Werktrockenmischung Körnungen bis maximal 1 mm Korngröße aufweisen. Das Calciumsilikathydratmaterial ist dabei vorzugsweise ein synthetisch hydrothermal hergestelltes Material mit einer Korngröße zwischen > 0-0,5, insbesondere zwischen > 0-0,2 mm.

Aufgabe der vorliegenden Erfindung ist die Bereitstellung von Verfahren zur Herstellung eines Materials für eine werkseitig angemischte Trockenmörtelmischung, die gute Verarbeitungseigenschaften aufweist und gute Mörtelfestigkeiten gewährleistet.

Weitere Aufgaben sind die Bereitstellung einer Verwendung des Materials in einer Trockenmörtelmischung oder einem Frischmörtel zur Herstellung einer Lagerfugenmörtelschicht eines Mauerwerks, einer Trockenmörtelmischung mit dem Material, eines Verfahrens zur Herstellung der Trockenmörtelmischung und deren Verwendung sowie einer Verwendung eines Frischmörtels zur Herstellung einer Lagerfugenmörtelschicht eines Mauerwerks.

Diese Aufgaben werden durch Verfahren gemäß Anspruch 1 und 3, eine Trockenmörtelmischung gemäß Anspruch 8, ein Verfahren zur Herstellung einer derartigen Trockenmörtelmischung gemäß Anspruch 12 und Verwendungen gemäß Anspruch 13, 14 und 15 gelöst. Vorteilhafte Weiterbildungen der Erfindung sind in den sich anschließenden Unteransprüchen gekennzeichnet.

Im Folgenden wird die Erfindung anhand einer Zeichnung beispielhaft näher erläutert. Es zeigen:
- Figur 1:: Ein Säulendiagramm mit Prüfwerten von erfindungsgemäßen Trockenmörtelmischungen einer ersten Versuchsreihe im Vergleich zu einer Referenzrezeptur gemäß dem Stand der Technik
- Figur 2:: Ein Säulendiagramm mit Mörteldruckfestigkeit und Trockenrohdichte einer erfindungsgemäßen Trockenmörtelmischung einer zweiten Versuchsreihe im Vergleich zu einer Referenzrezeptur gemäß dem Stand der Technik

Im Rahmen der Erfindung wurde herausgefunden, dass aktiviertes Material, welches durch trockenes Aufmahlen einer zumindest eine Poren- oder Schaumbetonkörnung aufweisenden Ausgangskörnung hergestellt wird, die Festigkeit einer Trockenmörtelmischung erheblich verbessern kann, ohne dabei jedoch die Festmörtelrohdichte in gleichem Maße zu erhöhen. Das aktivierte Material weist dann zumindest ein aktiviertes Poren- und/oder Schaumbetonmaterial auf.

Gemäß einem ersten erfindungsgemäßen Verfahren wird solange gemahlen, bis die Reindichte des aktivierten Materials, bestimmt mittels Helium-Pyknometrie, um mindestens 0,2 g/cm³ höher ist als die Reindichte der Ausgangskörnung.

Hierzu wird also die Reindichte der Ausgangskörnung und des aktivierten Materials bestimmt.

Die Reindichte wird im Rahmen der Erfindung gemäß Helium-Pyknometrie gemäß DIN 66137-2:2019-03 und Messanordnung 2 bestimmt. Im Folgenden wird der Übersichtlichkeit halber lediglich die Norm angegeben.

Vorzugsweise wird solange gemahlen, bis die Reindichte des aktivierten Materials, bestimmt mittels Helium-Pyknometrie gemäß DIN 66137-2:2019-03, um 0,2 bis 0,4 g/cm³, vorzugsweise um 0,3 bis 0,4 g/cm³, höher ist als die Reindichte der Ausgangskörnung.

Gemäß einer bevorzugten Ausführungsform wird solange gemahlen, bis die Reindichte des aktivierten Materials, bestimmt gemäß DIN 66137-2:2019-03, 2,4 bis 2,6 g/cm³, vorzugsweise 2,5 bis 2,6 g/cm³, beträgt.

Des Weiteren wird gemäß einem weiteren eigenständig erfindungsgemäßen Verfahren solange gemahlen, bis das aktivierte Material einen Blaine-Wert, bestimmt gemäß DIN 196-6:2019-03, von 13 000 bis 22 500 cm²/g, bevorzugt 14 000 bis 22 000 cm²/g, besonders bevorzugt 14 000 bis 21 500 cm²/g, aufweist.

Vorzugsweise weist die Trockenmörtelmischung das zumindest eine aktivierte Poren- oder Schaumbetonmaterial in einer Gesamtmenge an aktiviertem Poren- und/oder Schaumbetonmaterial von 5 bis 25 M.-%, bevorzugt 9 bis 15 M.-%, auf.

Wie bereits erläutert wird das aktivierte Material erfindungsgemäß in einer Trockenmörtelmischung, vorzugsweise einer trockenen Mauermörtelmischung, insbesondere einer Dünnbettmörtelmischung gemäß DIN EN 998-2:2017-02 oder der Muster-Verwaltungsvorschrift Technische Baubestimmungen (MVV TB), Ausgabe 2021/1, verwendet.

Das aktivierte Material kann auch vorteilhaft in einer trockenen Putzmörtelmischung verwendet werden.

Die Trockenmörtelmischung weist in an sich bekannter Weise eine Bindemittelkomponente mit zumindest einem mineralischen, vorzugsweise hydraulischen, Bindemittel, zumindest einen, vorzugsweise mineralischen, Zuschlagstoff, vorzugsweise zumindest einen inaktiven Zusatzstoff und vorzugsweise zumindest ein Zusatzmittel sowie erfindungsgemäß zumindest ein aktiviertes Poren- oder Schaumbetonmaterial auf.

Die Ausgangskörnung zur Herstellung des aktivierten Poren- und/oder Schaumbetonmaterials enthält dabei vorzugsweise zumindest eine Poren- oder Schaumbetonkörnung mit einem d₉₀-Wert ≤ 10 mm, bevorzugt ≤ 5 mm, besonders bevorzugt ≤ 2 mm. Der d₉₀-Wert wird dabei bei Poren- oder Schaumbetonkörnungen mit einer maximalen Korngröße > 2 mm mittels des Siebdurchgangs gemäß DIN EN 1015-1:2007-05 bestimmt und bei Poren- oder Schaumbetonkörnungen mit einer maximalen Korngröße ≤ 2 mm mittels Laserlichtbeugung gemäß ISO 13320:2020-01.

Die Poren- oder Schaumbetonkörnung weist zudem vorzugsweise eine maximale Korngröße ≤ 12 mm, bevorzugt ≤ 6 mm, besonders bevorzugt ≤ 3 mm auf.

Des Weiteren ist die Poren- oder Schaumbetonkörnung vorzugsweise grobkörnig, das heißt sie weist auch Körner mit einer Korngröße > 125 µm auf. Die Poren- oder Schaumbetonkörnung weist also einen Grobkornanteil auf.

Gemäß einer ersten Ausführungsform der Erfindung enthält die Ausgangskörnung zudem nur bzw. ausschließlich zumindest eine Poren- und/oder Schaumbetonkörnung und keine weiteren Komponenten. Der Anteil an Poren- und/oder Schaumbetonkörnung in der Ausgangskörnung beträgt somit 100 M.-%, bezogen auf die Trockenmasse der Ausgangskörnung. Diese Ausgangskörnung wird somit zu reinem aktivierten Poren- und/oder Schaumbetonmaterial aufgemahlen.

Alternativ dazu weist die Ausgangskörnung zusätzlich zu der zumindest einen Poren- oder Schaumbetonkörnung zumindest eine weitere Komponente der Trockenmörtelmischung, bevorzugt zumindest ein Bindemittel und/oder die Bindemittelkomponente, auf. Diese Ausgangskörnung wird somit zu einer aktivierten Mischung aufgemahlen, die zumindest ein aktiviertes Poren- oder Schaumbetonmaterial enthält.

Der Anteil an Poren- und/oder Schaumbetonkörnung in der Ausgangskörnung beträgt dabei vorzugsweise 60 bis 90 M.-%, bevorzugt 70 bis 85 M.-%, bezogen auf die Trockenmasse der Ausgangskörnung.

Des Weiteren weist die Poren- oder Schaumbetonkörnung vorzugsweise eine Sulfatkonzentration ≤ 600 mg/l, bevorzugt ≤ 100 mg/l, besonders bevorzugt ≤ 50 mg/l, Sulfat im Eluat gemäß DIN EN 12457-4: 2003-01(DEV S 4) auf.

Ein geringer Sulfatgehalt ist vorteilhaft, da eine Thaumasit-ZEttringitschädigung während der Nutzungsphase verhindert wird.

Außerdem weist die Poren- oder Schaumbetonkörnung vorzugsweise ein Schüttgewicht von 400 bis 700 g/l, bevorzugt 450 bis 600 g/l, gemäß DIN EN 1097-3:1998-06 auf.

Bei der Poren- oder Schaumbetonkörnung handelt es sich vorzugsweise um ein Nebenprodukt aus der Poren- oder Schaumbetonproduktion, das vorzugsweise mittels eines Brechers mechanisch zu der Poren- oder Schaumbetonkörnung mit der angegebenen Korngröße zerkleinert wurde. Bei dem Nebenprodukt handelt es sich insbesondere um technologischen Bruch.

Alternativ dazu handelt es sich bei der Poren- oder Schaumbetonkörnung um Recyclingmaterial, welches ebenfalls vorzugsweise mittels eines Brechers mechanisch zu der Poren- oder Schaumbetonkörnung mit der angegebenen Korngröße zerkleinert wurde. Das Recyclingmaterial kann auch recarbonatisiert sein. Zudem kann es bekanntermaßen anhaftende Putz- und Mörtelreste enthalten.

Selbstverständlich kann die Poren- oder Schaumbetonkörnung aber auch durch mechanische Zerkleinerung von eigens dafür hergestellten Poren- oder Schaumbetonformkörpern hergestellt werden.

Vorzugsweise handelt es sich um Porenbetonmaterial, welches hergestellt wurde gemäß dem Verfahren gemäß der EP 3 789 362 A1 oder gemäß der WO 2009/121635 A1 (Kalkguss).

Die Poren- oder Schaumbetonkörnung wird zudem vor dem Aufmahlen zunächst bis auf Massekonstanz getrocknet, bei einer Temperatur von 100 bis 300°C, bevorzugt 105 bis 200 °C, um physikalisch gebundenes Wasser auszutreiben.

Eine weitere Temperaturbehandlung der Poren- oder Schaumbetonkörnung und/oder des aktivierten Poren- oder Schaumbetonmaterials erfolgt im Rahmen der Erfindung nicht. Insbesondere erfolgt keine Calcinierung bei höheren Temperaturen.

Das trockene Aufmahlen der mechanisch zerkleinerten Ausgangskörnung erfolgt zudem in einer Mühle, vorzugsweise in einer Trommelmühle, bevorzugt in Form einer Kugelmühle, und/oder einer Walzenmühle.

Die Bindemittelkomponente weist vorzugsweise einen Portlandzement (CEM I) gemäß DIN EN 197-1:2011-11 und/oder einen Calciumsulfoaluminatzement und/oder hydraulischen Kalk und/oder Kalkhydrat und/oder einen puzzolanischen Zusatzstoff, bevorzugt Silicastaub und/oder Flugasche und/oder calcinierten Ton, und/oder einen latent hydraulischen Zusatzstoff, bevorzugt Hüttensand auf.

Portlandzement weist bekanntermaßen Portlandzementklinker und zumindest einen Erstarrungsregler, insbesondere Anhydrit und/oder Halbhydrat und/oder Gips auf. Calciumsulfoaluminatzement weist entsprechend Calciumsulfoaluminatzementklinker und zumindest einen solchen Erstarrungsregler auf. Werden andere Zemente gemäß DIN EN 197-1:2011-11 verwendet, die zusätzlich zum Portlandzement inerte Zusatzstoffe enthalten, werden diese Zusatzstoffe zu den inerten Zusatzstoffen gerechnet und nicht zum Bindemittelanteil.

Vorzugsweise weist die Trockenmörtelmischung einen Zement mit hohem Sulfatwiderstand gemäß DIN EN 197-1:2011-11 auf.

Hydraulische Kalke enthalten zusätzlich zum Calciumhydroxid sogenannte Hydraulefaktoren, etwa Silikate (z. B. SiO₂), Aluminate (z. B. Al₂O₃) und Eisenoxide (z. B. Fe₂O₃) aus denen sich Calciumsilikate und Calciumaluminate bilden. Der hydraulische Anteil der Bindemittel kann auch unter Wasser aushärten, da kein Zutritt von Kohlendioxid notwendig ist.

Vorzugsweise beträgt der Gesamtanteil bzw. die Gesamtmenge an Bindemittel in der Trockenmörtelmischung zudem 20 bis 40, bevorzugt 30 bis 40 M.-%.

Anders formuliert weist die Trockenmörtelmischung vorzugsweise 20 bis 40 M.-%, bevorzugt 30 bis 40 M.-% Bindemittel, bezogen auf die Trockenmasse der Trockenmörtelmischung auf.

Die die Trockenmörtelmischung betreffenden Mengenangaben beziehen sich, falls nicht anders angegeben, immer auf die Trockenmasse der Trockenmörtelmischung, auch wenn dies nicht explizit erwähnt ist.

Zudem werden Korngrößen, falls nicht anders angegeben, immer durch Bestimmung des Siebdurchgangs gemäß DIN EN 1015-1:2007-05 ermittelt, auch wenn dies nicht explizit erwähnt ist.

Bei dem zumindest einen Zuschlagstoff handelt es sich vorzugsweise einen Normalzuschlagstoff, bevorzugt um Quarzsand.

Die Trockenmörtelmischung kann aber auch zumindest einen Leichtzuschlagstoff aufweisen. Bevorzugt handelt es sich bei dem zumindest einen Leichtzuschlagstoff um Blähton und/oder Blähglas und/oder Bims und/oder Schaumglas und/oder Blähschiefer und/oder geblähten Perlit und/oder geblähten Vermiculit und/oder einen Zellulosefasern enthaltenden Leichtzuschlagstoff, z.B. Holz und/oder Bambus und/oder Hanf.

Wie bereits erläutert, kann die Trockenmörtelmischung zudem zumindest einen inaktiven bzw. inerten Zusatzstoff, vorzugsweise natürliches Kalksteinmehl und/oder gefälltes Calciumcarbonat (PCC), aufweisen.

Vorzugsweise weist die Trockenmörtelmischung eine Gesamtmenge an Zuschlagstoff(en) und inaktiven Zusatzstoff(en) von 35 bis 65 M.-%, bevorzugt 45 bis 60 M.-%, bezogen auf die Trockenmasse der Trockenmörtelmischung auf.

Außerdem kann die Trockenmörtelmischung zudem Fasern aufweisen. Die Fasern weisen vorzugsweise eine Länge von 2 bis 8 mm, bevorzugt 5 bis 6 mm, auf. Zudem bestehen die Fasern vorzugsweise aus Kunststoff, vorzugsweise Polypropylen, und/oder mineralischem Material.

Vorzugsweise weist die Trockenmörtelmischung 0 bis 2 M.-%, bevorzugt 0,1 bis 2 M.-%, Fasern, bezogen auf die Trockenmasse der Trockenmörtelmischung auf (=Gesamtanteil an Fasern).

Die Trockenmörtelmischung weist zudem (abgesehen von den gegebenenfalls vorhandenen Fasern) eine maximale Korngröße ≤ 4 mm, vorzugsweise eine maximale Korngröße ≤ 2 mm, bevorzugt eine maximale Korngröße ≤ 1 mm, auf.

Wie bereits erläutert, weist die Trockenmörtelmischung zudem vorzugsweise zumindest ein Zusatzmittel auf, vorzugsweise zumindest einen Luftporenbildner und/oder zumindest ein Dispersionsmittel und/oder zumindest ein Wasserretentionsmittel, bevorzugt Methylcellulose.

Vorzugsweise weist die Trockenmörtelmischung 0,1 bis 2,0 M.-%, bevorzugt 0,2 bis 1,0 M.-%, Zusatzmittel, bezogen auf die Trockenmasse der Trockenmörtelmischung auf (=Gesamtanteil an Zusatzmittel(n)).

Im Rahmen der Erfindung wurde nun herausgefunden, dass das aktivierte Poren- oder Schaumbetonmaterial die mechanischen Festigkeitseigenschaften der Trockenmörtelmischung deutlich verbessern kann.

Woraus dieser Effekt resultiert, ist noch nicht abschließend geklärt. Es wird davon ausgegangen, dass es sich um einen mechanochemischen Aktivierungsprozess der Mineraloberflächen handelt. Gegebenenfalls finden auch Mineralumwandlungen durch das Aufmahlen statt. Dies könnte aus der Veränderung der Reindichte geschlossen werden.

Vorzugsweise weist die Trockenmörtelmischung, insbesondere Mauermörtelmischung, eine Mörteldruckfestigkeit gemäß DIN EN 1015-11:2020-01 von 5 bis 30 N/mm², bevorzugt von 10 bis 25 N/mm², auf.

Vorzugsweise weist die Trockenmörtelmischung, insbesondere Mauermörtelmischung, außerdem eine Mörtelbiegezugfestigkeit gemäß DIN EN 1015-11:2020-01 von 2 bis 5 N/mm², bevorzugt von 3 bis 4 N/mm², auf.

Außerdem weist die Trockenmörtelmischung vorzugsweise eine Festmörtelrohdichte von 1 bis 3 kg/dm³, bevorzugt von 1 bis 2 kg/dm³, gemäß DIN EN 1015-10:2007-05 auf.

Außerdem weist die Trockenmörtelmischung vorzugsweise eine Trockenrohdichte von 0,8 bis 2,5 kg/dm³, bevorzugt von 1 bis 1,5 kg/dm³, besonders bevorzugt von 1,3 bis 1,5 kg/dm³, gemäß DIN EN 1015-10:2007-05 auf.

Dabei werden, wie bereits erläutert, die Frischmörteleigenschaften der erfindungsgemäßen Trockenmörtelmischung nicht negativ durch das erfindungsgemäße Poren- oder Schaumbetonmaterial beeinflusst.

Vorzugsweise weist der durch Anmischen der erfindungsgemäßen Trockenmörtelmischung mit Wasser hergestellte Frischmörtel eine Frischmörtelrohdichte gemäß DIN EN 1015-6:2007-05 von 1 bis 3 kg/dm³, bevorzugt von 1 bis 2 kg/dm³, auf.

Wie bereits erläutert, handelt es sich bei der Trockenmörtelmischung vorzugsweise um einen Mauermörtel. Aus dem Mauermörtel wird in an sich bekannter Weise eine Lagerfugenmörtelschicht eines Mauerwerks hergestellt.

Im Folgenden wird die Erfindung anhand von Ausführungsbeispielen näher erläutert:

### Ausführungsbeispiele:

Im Rahmen der Ausführungsbeispiele wurden Trockenmörtelmischungen mit unterschiedlichen Zusammensetzungen hergestellt.

Für die Ausführungsbeispiele wurden folgende Rohstoffe verwendet:

**Tabelle 1: Verwendete Rohstoffe**

| **Bezeichnung** | **Kurzbezeichnung** | **Hersteller** |
|---|---|---|
| **Portlandzement weiß CEM I 52,5 R-SR5** | CEM I w | Aalborg Portland A/S (Aalborg) |
| **Kalkstein-Füller (Herstellerbezeichnung) 60/3 (Werk Rübeland)** | KstF | Fels Werke GmbH (Goslar) |
| **Quarzsand 0,1 - 2 mm (Grube Linthe)** | QS 0,1-2 | Firmengruppe Max Bögl (Sengenthal) |
| **Circosil 0,1** | CIRC | Cirkel GmbH & Co. KG (Emsdetten) |
| **Sulfatfreie Porenbetonkörnung, hergestellt mit Kalkguss-Verfahren im Kleinversuch, behandelt bei 105 °C ≤ 2 mm, d₉₀=1701 µm** | SFPBK | Xella Technologie- und Forschungsgesellschaft mbH (Brück) |
| **Sulfathaltige Porenbetonkörnung aus Produktion (BRK), behandelt bei 105 °C ≤ 2 mm, d₉₀=931 µm** | PBK | Xella Deutschland GmbH (Brück) |
| **Methylcellulose, MHS 150003 P4** | MC SET | SE Tylose GmbH & Co. KG (Wiesbaden) |

Die Porenbetonkörnungen wurde jeweils vor dem Aufmahlen bei einer Temperatur von 105°C in einem Trockenschrank für 2 Tage auf Gewichtskonstanz getrocknet.

Für die Herstellung eines reinen aktivierten Porenbetonmaterials (PBM) wurden die Porenbetonkörnungen jeweils allein trocken aufgemahlen.

Für die Herstellung einer das aktivierte Porenbetonmaterial enthaltenden aktivierten Mischung wurde eine Ausgangskörnung hergestellt, die die sulfathaltige Porenbetonkörnung PBK und den Portlandzement in einem Verhältnis von 80:20 enthielt und die Ausgangskörnung aufgemahlen.

Das Aufmahlen erfolgte jeweils in einer Trommelmühle mit den folgenden Eigenschaften:

**Tabelle 2: Eigenschaften der Trommelmühle und verfahrenstechnische Parameter**

| **Trommelmühle** | |
|---|---|
| Hersteller | WELTE^{a)} Mahltechnik, Köln |
| Baujahr | 1995 |
| Typenbezeichnung | WGN-WGT 100 |
| Panzerung | Gummi |
| Mühlendurchmesser | 46,5 cm |
| Mühlenlänge | 48 cm |
| Rotationsgeschwindigkeit | 48 U/min |
| Art der Mahlung | Trockenmahlung |
| Mahlgutmasse | laut Angabe |

| **Mahlkugeln** | |
|---|---|
| Hersteller | CeramTec GmbH, Plochingen |
| Material | Al₂0₃ |
| Reinheit | 92% |

| **Gattierung** | |
|---|---|
| Mahlköpergesamtmasse | 70.000 g |
| Anteil Kugel Ø = 40 mm | 50 % |
| Anteil Kugel Ø = 30 mm | 30 % |
| Anteil Kugel Ø = 20 mm | 20 % |

| | |
|---|---|
| ^{a)} Firmenauflösung 1998, Service über AAM Mahltechnik GmbH, Köln | |

Zudem erfolgte das Aufmahlen mit folgenden verfahrenstechnischen Parametern:

**Tabelle 3: Verfahrenstechnische Parameter des Mahlvorgangs**

| | **Mahldauer** | **Masse Mahlgut** |
|---|---|---|
| | [min] | [g] |
| **Versuch I und II** | 270 | 7500 |
| **Versuch V** | 180 | 5500 |

**Tabelle 4: Reindichten**

| | **Reindichte Ausgangskörnung** | **Reindichte aktiviertes PBM bzw. aktivierte Mischung** | **Blaine-Wert aktiviertes PBM bzw. aktivierte Mischung** |
|---|---|---|---|
| | [g/cm³] | [g/cm³] | [cm²/g] |
| **Versuch I** | 2,2 | 2,5 | 15790 |
| **Versuch II** | 2,2 | 2,5 | 21450 |
| **Versuch V** | 2,2 | 2,5 | 14980 |

In einem nächsten Schritt wurden aus den Rohstoffen Trockenmörtelmischungen durch trockenes Mischen in einem Eirich Intensivmischer (Typ RV01, Baujahr 2013) hergestellt. Die Mischparameter waren wie folgt:

**Tabelle 5: Mischparameter Eirich Intensivmischer**

| **Parameter** | **Einstellung** |
|---|---|
| Drehrichtung Wirbler | rechts |
| Behältergeschwindigkeit | 83 U/min |
| Wirblergeschwindigkeit | 1000 U/min |
| Mischzeit | 120 s |

Und aus den Trockenmörtelmischungen wurden jeweils durch Anmischen mit Anmachwasser Frischmörtel hergestellt. Dazu wurde ein Mörtelmischer der Firma Testing, Berlin, Typ 1.0204.LV, Baujahr 2019 verwendet. Der Mörtelmischer wurde auf Rotations-Stufe 1 betrieben. Das Einfüllen der Komponenten erfolgte durch einen Spalt am Schutzgitter während der Rotation.

Das Mischregime war wie folgt:

**Tabelle 6: Mischregime Testing Mörtelmischer**

| **Schritt** | **Bezeichnung** | **Dauer** |
|---|---|---|
| 1 | Einfüllzeit | 30 s |
| 2 | Mischzeit 1 | 30 s |
| 3 | Abstreifzeit (keine Rotation) | 30 s |
| 4 | Mischzeit 2 | 30 s |
| 5 | Ruhezeit (keine Rotation) | 300 s |
| 6 | Nachmischzeit | 5s |

Aus den Frischmörteln wurden normgemäße Prüfkörper gemäß DIN EN 1015-11:2019 hergestellt.

An den Frischmörteln und den Prüfkörpern wurden folgende Prüfungen durchgeführt:

**Tabelle 7: Prüfungen**

| **Prüfparameter** | **Prüfnorm** |
|---|---|
| Ausbreitmaß | DIN EN 1015-3: 2007-05 |
| Frischmörtelrohdichte | DIN EN 1015-6: 2007-05 |
| Festmörtelrohdichte | DIN EN 1015-10: 2007-05 |
| Trockenrohdichte | DIN EN 1015-10: 2007-05 |
| Biegezugfestigkeit (28 d) | DIN EN 1015-11: 2020-01 |
| Druckfestigkeit (28 d) | DIN EN 1015-11: 2020-01 |
| Reindichte | DIN 66137-2:2019-03 |
| Blaine-Wert | DIN EN 196-6:2019-03 |

### Versuchsreihe 1:

Im Rahmen der ersten Versuchsreihe wurden folgende Trockenmörtelmischungen mit Circosil als Referenz sowie mit sulfathaltigem, aktiviertem Porenbetonmaterial (PBM aktiviert) hergestellt:

**Tabelle 8: Zusammensetzungen der Trockenmörtelmischungen der ersten Versuchsreihe**

| | **Versuch I** | **Versuch II** | **Versuch III (Referenz A)** |
|---|---|---|---|
| | **[M.-%]** | **[M.-%]** | **[M.-%]** |
| **CEM Iw** | 32,4 | 35,4 | 35,4 |
| **KstF** | 15,2 | 15,2 | 15,2 |
| **QS 0,1-2** | 36,9 | 36,9 | 36,9 |
| **PBM aktiviert** | 0,0 | 12,2 | 0,0 |
| **aktivierte Mischung** | 15,2 | 0,0 | 0,0 |
| **CIRC** | 0,0 | 0,0 | 12,2 |
| **MCSE T** | 0,3 | 0,3 | 0,3 |

Die Ergebnisse der Prüfung der Trockenmörtelmischungen der ersten Versuchsreihe sind in nachstehender Tabelle dargestellt:

**Tabelle 9: Prüfdaten der Trockenmörtelmischungen der ersten Versuchsreihe**

| | **Versuch I** | **Versuch II** | **Versuch III (Referenz A)** |
|---|---|---|---|
| | **[M.-%]** | **[M.-%]** | **[M.-%]** |
| **W/F [-]** | 0,34 | 0,34 | 0,34 |
| **Ausbreitmaß [cm]** | 16,5 | 16,5 | 16,0 |
| **Frischmörtelrohdichte [kg/dm³]** | 1,651 | 1,632 | 1,588 |
| **Festmörtelrohdichte [kg/dm³]** | 1,448 | 1,412 | 1,376 |
| **Biegezugfestigkeit [N/mm²]** | 3,5 | 3,4 | 3,6 |
| **Trockenrohdichte [kg/dm³]** | 1,350 | 1,310 | 1,275 |
| **Druckfestigkeit [N/mm²]** | 15,4 | 16,6 | 9,3 |

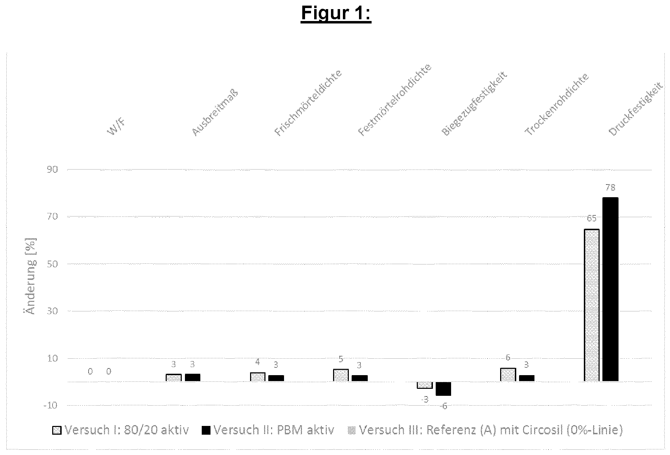

Figur 1 zeigt einen Vergleich der relativen Messwerte.

Bei identischem W/F-Wert können kaum Änderungen am Ausbreitmaß bzw. Viskosität bei den erfindungsgemäßen Trockenmörtelmischungen im Vergleich zur Referenzmischung festgestellt werden. Gleiches zeigt sich bei Frischmörteldichte, Festmörteldichte und Trockenrohdichte. Die Mörtelbiegezugfestigkeit ist bei den erfindungsgemäßen Trockenmörtelmischungen minimal geringer. Bei der Mörteldruckfestigkeit zeigen sich hingegen deutliche Unterschiede. Die Mörteldruckfestigkeit der erfindungsgemäßen Trockenmörtelmischungen ist deutlich höher als bei der Referenzmischung.

### Versuchsreihe 2:

Im Rahmen der zweiten Versuchsreihe wurden folgende Trockenmörtelmischungen mit Circosil als Referenz sowie mit sulfatfreiem, aktiviertem Porenbetonmaterial (SFPBM aktiviert) hergestellt:

**Tabelle 10: Zusammensetzungen der Trockenmörtelmischungen der zweiten Versuchsreihe**

| **Versuch** | **Versuch IV (Referenz B)** | **Versuch V** |
|---|---|---|
| **Komponenten** | **[M.-%]** | **[M.-%]** |
| **CEM I w** | 35,4 | 35,4 |
| **KstF** | 15,2 | 15,2 |
| **QS 0,1-2** | 36,9 | 36,9 |
| **SFPBM aktiviert** | 0,0 | 12,2 |
| **CIRC** | 12,2 | 0,0 |
| **MC SE T** | 0,3 | 0,3 |

Die Ergebnisse der Prüfung der Trockenmörtelmischungen der zweiten Versuchsreihe sind in nachstehender Tabelle dargestellt:

**Tabelle 11: Prüfdaten der Trockenmörtelmischungen der zweiten Versuchsreihe**

| **Versuch** | | **Versuch IV: Referenz (B) mit Circosil** | **Versuch V: SFPBM aktiv** |
|---|---|---|---|
| | | **[M.-%]** | **[M.-%]** |
| **W/F** | [-] | 0,37 | 0,37 |
| **Ausbreitmaß** | [cm] | 17,5 | 17,7 |
| **Frischmörtelrohdichte** | [kg/dm³] | n.b. | n.b. |
| **Festmörtelrohdichte** | [kg/dm³] | 1,252 | 1,365 |
| **Trockenrohdichte** | [kg/dm³] | 1,157 | 1,270 |
| **Biegezugfestigkeit** | [N/mm²] | 2,9 | 3,0 |
| **Druckfestigkeit** | [N/mm²] | 9,4 | 12,8 |

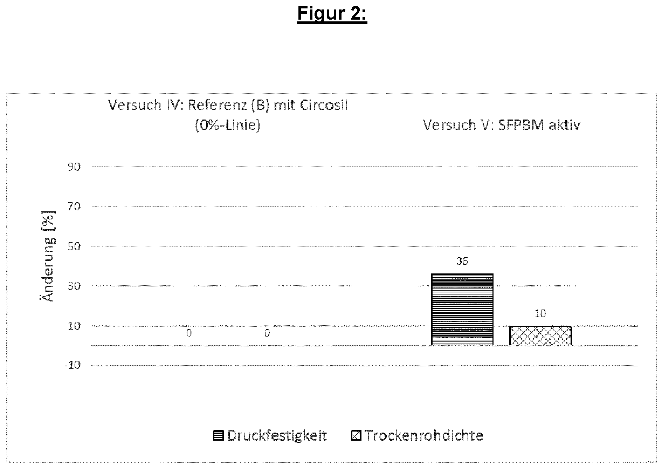

Figur 2 zeigt die Steigerung der Mörteldruckfestigkeit der erfindungsgemäßen Trockenmörtelmischung und die Trockenrohdichte.

Wie bei der ersten Versuchsreihe zeigt sich auch bei der zweiten Versuchsreihe eine deutliche Steigerung (Ø 35 %) bei der Mörteldruckfestigkeit durch den Einsatz des aktivierten Porenbetonmaterials. Aufgrund der Verwendung des Porenbetonmaterials ergab sich lediglich eine geringfügige Erhöhung der Trockenrohdichte (Figur 2). Die gemessene Mörteldruckfestigkeit der Referenzmischung ist mit den Werten der ersten Versuchsreihe vergleichbar.

Zusammenfassend bewirkt der Austausch des vorbekannten Materials Circosil kaum Änderungen an Ausbreitmaß bzw. Viskosität. Ein Nachjustieren des W/F-Werts ist nicht notwendig. Die Frischmörteldichte, Festmörtelrohdichte, Trockenrohdichte und Biegezugfestigkeit bleiben vom Wechsel des Porenbetonmaterials nahezu unbeeinflusst. Die beiden Rezepturen mit erfindungsgemäßem Porenbetonmaterial zeigen eine Steigerung der 28-Tage-Druckfestigkeit gegenüber Circosil von ca. 60 %. Die Trockenrohdichte des Festmörtels war nur unwesentlich durch den Einsatz von aktiviertem Porenbetonmehl anstatt des bekannten Porenbetonmaterials Circosil erhöht.

Zwischen der reinen Porenbetonmahlung und der gemeinsamen Mahlung mit Zement konnte keine deutlich unterschiedlich starke Wirkung auf die Trockenmörtelmischung und deren Eigenschaften festgestellt werden.

Die Trocknung des Porenbetongranulats bei um die 105 °C auf Massekonstanz ist zudem ausreichend, um eine Hydratation des Zements sowohl im Mahlprozess als auch in der Trockenmörtelmischung zu verhindern.

Ob es sich bei dem aktivierten Poren- oder Schaumbetonmaterial um ein aktives oder inertes Material handelt, hängt tatsächlich von dessen Wirkungsweise in der mit Wasser angemischten Trockenmörtelmischung ab, die noch nicht geklärt ist. Ist das aktivierte Porenbetonmaterial dem verwendeten Bindemittel (z. B. dem Portlandzement) zumindest ansatzweise gleichwertig, so wäre es als Bindemittel einzuordnen.

Im Rahmen der Erfindung wird das aktivierte Poren- oder Schaumbetonmaterial aufgrund der noch nicht bekannten Wirkungsweise als eigenständiges Material angesehen und weder dem Bindemittel, noch den inerten Zusatzstoffen oder Zuschlagstoffen zugerechnet.

## Patentansprüche

1. Verfahren zur Herstellung eines aktivierten Materials aufweisend zumindest ein aktiviertes Poren- und/oder Schaumbetonmaterial, insbesondere zumindest ein aktiviertes Porenbetonmaterial, mit folgenden Verfahrensschritten:
- Bereitstellung einer Ausgangskörnung aufweisend zumindest eine Poren- und/oder Schaumbetonkörnung,
- trockenes Mahlen der Ausgangskörnung zu dem aktivierten Material,
**dadurch gekennzeichnet, dass**
solange gemahlen wird, bis die Reindichte des aktivierten Materials, bestimmt mittels Helium-Pyknometrie gemäß DIN 66137-2:2019-03, um mindestens 0,2 g/cm³ höher ist als die Reindichte der Ausgangskörnung, bestimmt mittels Helium-Pyknometrie gemäß DIN 66137-2:2019-03,
wobei vorzugsweise solange gemahlen wird, bis die Reindichte des aktivierten Materials, bestimmt mittels Helium-Pyknometrie gemäß DIN 66137-2:2019-03, um 0,2 bis 0,4 g/cm³, vorzugsweise 0,3 bis 0,4 g/cm³, höher ist als die Reindichte der Ausgangskörnung, bestimmt mittels Helium-Pyknometrie gemäß DIN 66137-2:2019-03.

2. Verfahren nach Anspruch 1,
**dadurch gekennzeichnet, dass**
solange gemahlen wird, bis die Reindichte des aktivierten Materials, bestimmt mittels Helium-Pyknometrie gemäß DIN 66137-2:2019-03, 2,4 bis 2,6 g/cm³, vorzugsweise 2,5 bis 2,6 g/cm³, beträgt.

3. Verfahren zur Herstellung eines aktivierten Materials aufweisend zumindest ein aktiviertes Poren- und/oder Schaumbetonmaterial, insbesondere zumindest ein aktiviertes Porenbetonmaterial, insbesondere Verfahren nach einem der vorhergehenden Ansprüche, mit folgenden Verfahrensschritten:
- Bereitstellung einer Ausgangskörnung aufweisend zumindest eine Poren- und/oder Schaumbetonkörnung,
- trockenes Mahlen der Ausgangskörnung zu dem aktivierten Material,
**dadurch gekennzeichnet, dass**
solange gemahlen wird, bis das aktivierte Material einen Blaine-Wert, bestimmt gemäß DIN 196-6:2019-03, von 13000 bis 22500 cm²/g, bevorzugt 14 000 bis 22 000 cm²/g, besonders bevorzugt 14 000 bis 21 500 cm²/g, aufweist.

4. Verfahren nach einem der vorhergehenden Ansprüche,
**dadurch gekennzeichnet, dass**
die zumindest eine Poren- und/oder Schaumbetonkörnung
a) einen d₉₀-Wert ≤ 10 mm, bevorzugt ≤ 5 mm, besonders bevorzugt ≤ 2 mm, bei einer Poren- oder Schaumbetonkörnung mit einer maximalen Korngröße > 2 mm bestimmt mittels des Siebdurchgangs gemäß DIN EN 1015-1:2007-05 und bei einer Poren- oder Schaumbetonkörnung mit einer maximalen Korngröße ≤ 2 mm bestimmt mittels Laserlichtbeugung gemäß ISO 13320:2020-01,
und/oder
b) eine maximale Korngröße ≤ 12 mm, bevorzugt ≤ 6 mm, besonders bevorzugt ≤ 3 mm, bestimmt mittels des Siebdurchgangs gemäß DIN EN 1015-1:2007-05,
und/oder
c) einen Grobkornanteil aufweisend Körner mit einer Korngröße > 125 µm, bestimmt mittels des Siebdurchgangs gemäß DIN EN 1015-1:2007-05,
aufweist.

5. Verfahren nach einem der vorhergehenden Ansprüche,
**dadurch gekennzeichnet, dass**
die zumindest eine Poren- und/oder Schaumbetonkörnung einen Sulfatgehalt ≤ 600 mg/l, bevorzugt ≤ 100 mg/l, besonders bevorzugt ≤ 50 mg/l, Sulfat im Eluat gemäß DIN EN 12457-4: 2003-01(DEV S 4) aufweist.

6. Verfahren nach einem der vorhergehenden Ansprüche,
**dadurch gekennzeichnet, dass**
a) die Ausgangskörnung ausschließlich die zumindest eine Poren- und/oder Schaumbetonkörnung aufweist,
oder
b) der Anteil an Poren- und/oder Schaumbetonkörnung in der Ausgangskörnung 60 bis 90 M.-%, bevorzugt 70 bis 85 M.-%, bezogen auf die Trockenmasse der Ausgangskörnung, beträgt.

7. Verfahren nach einem der vorhergehenden Ansprüche,
**dadurch gekennzeichnet, dass**
a) die Ausgangskörnung zumindest ein, bevorzugt hydraulisches, Bindemittel, insbesondere Portlandzementklinker und zumindest einen Erstarrungsregler, bevorzugt einen Portlandzement, aufweist und/oder vorzugsweise daraus besteht,
und/oder
b) die zumindest eine Poren- oder Schaumbetonkörnung vor dem Mahlen bei einer Temperatur von 100 bis 300 °C, bevorzugt 105 bis 200 °C, auf Massekonstanz getrocknet wird und vorzugsweise keine weitere Temperaturbehandlung der Poren- oder Schaumbetonkörnung und/oder des aktivierten Poren- oder Schaumbetonmaterials erfolgt,
und/oder
c) das Mahlen der Ausgangskörnung in einer Mühle, vorzugsweise in einer Trommelmühle, bevorzugt in Form einer Kugelmühle, und/oder in einer Walzenmühle, erfolgt,
und/oder
d) die zumindest eine Poren- oder Schaumbetonkörnung und/oder das aktivierte Poren- oder Schaumbetonmaterial nicht calciniert wird.

8. Trockenmörtelmischung, vorzugsweise trockene Mauermörtelmischung, insbesondere Dünnbettmörtelmischung, oder trockene Putzmörtelmischung, aufweisend:
a) Eine Bindemittelkomponente mit zumindest einem, bevorzugt hydraulischen, Bindemittel, vorzugsweise in einer Menge von 20 bis 40 M.-%, bevorzugt 30 bis 40 M.-%,
b) Zumindest einen Zuschlagstoff,
c) Vorzugsweise zumindest einen inerten Zusatzstoff,
d) Vorzugsweise zumindest ein Zusatzmittel, vorzugsweise in einer Gesamtmenge an Zusatzmittel von 0,1 bis 2,0 M.-%, bevorzugt 0,2 bis 1,0 M.-%,
**dadurch gekennzeichnet, dass**
die Trockenmörtelmischung ein nach einem der vorhergehenden Ansprüche hergestelltes aktiviertes Material aufweist.

9. Trockenmörtelmischung nach Anspruch 8,
**dadurch gekennzeichnet, dass**
a) die Trockenmörtelmischung das zumindest eine aktivierte Poren- oder Schaumbetonmaterial in einer Gesamtmenge an aktiviertem Poren- und/oder Schaumbetonmaterial von 5 bis 25 M.-%, bevorzugt 9 bis 15 M.-%, aufweist,
und/oder
b) die Trockenmörtelmischung eine Gesamtmenge an Zuschlagstoff(en) und inerten Zusatzstoff(en) zusammen genommen von 35 bis 65 M.-%, bevorzugt 45 bis 60 M.-%, aufweist,
und/oder
c) die Trockenmörtelmischung eine maximale Korngröße ≤ 4 mm, vorzugsweise ≤ 2 mm, besonders bevorzugt ≤ 1 mm, aufweist.

10. Trockenmörtelmischung nach Anspruch 8 oder 9,
**dadurch gekennzeichnet, dass**
a) die Trockenmörtelmischung eine Trockenrohdichte von 0,8 bis 2,5 kg/dm³, bevorzugt von 1 bis 1,5 kg/dm³, besonders bevorzugt von 1,3 bis 1,5 kg/dm³, gemäß DIN EN 1015-10:2007-05 aufweist,
und/oder
b) die Trockenmörtelmischung, insbesondere Mauermörtelmischung, eine Mörteldruckfestigkeit gemäß DIN EN 1015-11:2020-01 von 5 bis 30 N/mm², bevorzugt von 10 bis 25 N/mm², aufweist,
und/oder
c) die Trockenmörtelmischung, insbesondere Mauermörtelmischung, eine Mörtelbiegezugfestigkeit gemäß DIN EN 1015-11:2020-01 von 2 bis 5 N/mm², bevorzugt von 3 bis 4 N/mm², aufweist.

11. Trockenmörtelmischung nach einem der Ansprüche 8 bis 10,
**dadurch gekennzeichnet, dass**
a) es sich bei dem zumindest einen Zuschlagstoff um Quarzsand und/oder Blähton und/oder Blähglas und/oder Bims und/oder Schaumglas und/oder Blähschiefer und/oder geblähten Perlit und/oder geblähten Vermiculit und/oder einen Zellulosefasern enthaltenden Leichtzuschlagstoff, z.B. Holz und/oder Bambus und/oder Hanf, handelt,
und/oder
b) es sich bei dem zumindest einen Zusatzmittel um zumindest einen Luftporenbildner und/oder zumindest ein Dispersionsmittel und/oder zumindest ein Wasserretentionsmittel, bevorzugt Methylcellulose, handelt,
und/oder
c) es sich bei dem zumindest einen Zusatzstoff um natürliches Kalksteinmehl und/oder gefälltes Calciumcarbonat (PCC) handelt,
und/oder
d) die Bindemittelkomponente zumindest ein, bevorzugt hydraulisches, Bindemittel, insbesondere Portlandzementklinker und zumindest einen Erstarrungsregler, aufweist.

12. Verfahren zur Herstellung einer Trockenmörtelmischung nach einem der Ansprüche 8 bis 11, wobei die einzelnen Bestandteile der Trockenmörtelmischung miteinander vermischt werden,
**dadurch gekennzeichnet, dass**
das aktivierte Material nach einem der Ansprüche 1 bis 7 hergestellt wird.

13. Verwendung eines gemäß dem Verfahren nach einem der Ansprüche 1 bis 7 hergestellten aktivierten Materials in einer Trockenmörtelmischung, vorzugsweise einer trockenen Mauermörtelmischung oder einer trockenen Putzmörtelmischung, oder in einem mit Wasser angemachten Frischmörtel zur Herstellung einer Lagerfugenmörtelschicht eines Mauerwerks oder zur Herstellung eines Putzes,
wobei vorzugsweise das aktivierte Material in einer Trockenmörtelmischung nach einem der Ansprüche 8 bis 11 und/oder hergestellt gemäß dem Verfahren gemäß Anspruch 12 verwendet wird.

14. Verwendung einer Trockenmörtelmischung gemäß einem der Ansprüche 8 bis 11 und/oder hergestellt gemäß dem Verfahren gemäß Anspruch 12 zur Herstellung einer Lagerfugenmörtelschicht eines Mauerwerks oder zur Herstellung eines Putzes.

15. Verwendung eines Frischmörtels aufweisend ein gemäß dem Verfahren nach einem der Ansprüche 1 bis 7 hergestelltes aktiviertes Material und/oder eine Trockenmörtelmischung nach einem der Ansprüche 8 bis 11 und/oder eine Trockenmörtelmischung hergestellt gemäß dem Verfahren gemäß Anspruch 12 zur Herstellung einer Lagerfugenmörtelschicht eines Mauerwerks oder zur Herstellung eines Putzes.
